(19)

**Europäisches Patentamt**
**European Patent Office**
**Office européen des brevets**

(11) **EP 4 363 833 B1**

(12) **EUROPEAN PATENT SPECIFICATION**

(45) Date of publication and mention
of the grant of the patent:
**07.05.2025 Bulletin 2025/19**

(21) Application number: **22741857.1**

(22) Date of filing: **29.06.2022**

(51) International Patent Classification (IPC):
**G01N 21/64** (2006.01)    **G02B 21/00** (2006.01)

(52) Cooperative Patent Classification (CPC):
**G02B 21/0084; G02B 21/0032; G02B 21/0064;**
G02B 21/0076; G02B 27/58

(86) International application number:
**PCT/IB2022/056046**

(87) International publication number:
**WO 2023/275777 (05.01.2023 Gazette 2023/01)**

(54) **SIMULTANEOUS MULTI-SPECIES SUPER-RESOLUTION IMAGING VIA TEMPORAL MULTIPLEXING AND SINGLE- PHOTON DETECTOR ARRAY**

SIMULTANE SUPERAUFLÖSUNGSBILDGEBUNG MEHRERER SPEZIES ÜBER ZEITLICHES MULTIPLEXING UND EINZELPHOTONENDETEKTORANORDNUNG

IMAGERIE SIMULTANÉE À SUPER-RÉSOLUTION MULTI-ESPÈCES PAR MULTIPLEXAGE TEMPOREL ET RÉSEAU DE DÉTECTEURS À PHOTON UNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2021 IT 202100017018**

(43) Date of publication of application:
**08.05.2024 Bulletin 2024/19**

(73) Proprietor: **Fondazione Istituto Italiano di
Tecnologia
16163 Genova (IT)**

(72) Inventors:
 • **VICIDOMINI, Giuseppe**
  **16122 Genova (IT)**
 • **TORTAROLO, Giorgio**
  **16148 Genova (IT)**
 • **CASTELLO, Marco**
  **16145 Genova (IT)**
 • **PIAZZA, Simonluca**
  **16010 Serra Ricco' (Genova) (IT)**
 • **BIANCHINI, Paolo**
  **16132 Genova (IT)**
 • **DIASPRO, Alberto**
  **16124 Genova (IT)**

(74) Representative: **Vanzini, Christian et al
Jacobacci & Partners S.p.A.
Corso Emilia 8
10152 Torino (IT)**

(56) References cited:
**WO-A1-2020/018616      US-A1- 2004 007 675
US-A1- 2009 173 892**

 • CASTELLO MARCO ET AL: "A robust and versatile platform for image scanning microscopy enabling super-resolution FLIM", NATURE METHODS, NATURE PUBLISHING GROUP US, NEW YORK, vol. 16, no. 2, 14 January 2019 (2019-01-14), pages 175 - 178, XP036694959, ISSN: 1548-7091, [retrieved on 20190114], DOI: 10.1038/S41592-018-0291-9
 • GHEZZI ALBERTO ET AL: "Multispectral compressive fluorescence lifetime imaging microscopy with a SPAD array detector", vol. 46, no. 6, 15 March 2021 (2021-03-15), US, pages 1353, XP055899828, ISSN: 0146-9592, Retrieved from the Internet <URL:https://opg.optica.org/DirectPDFAccess/43F38B7B-2EC3-4C4F-9F09A43C407B540B_449032/ol-46-6-1353.pdf?da=1&id=449032&seq=0&mobile=no> DOI: 10.1364/OL.419381

EP 4 363 833 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates generally to multi-species fluorescence microscopy techniques.

Confocal laser scanning microscopy (CLSM) with fluorescence is a widely used imaging tool for cell and molecular biology. This technique offers the possibility of three-dimensional imaging, deep imaging, live cell imaging, and quantitative imaging, all together and combined with current developments in fluorescence microscopy. At present, a wide variety of fluorescent dyes (e.g., synthetic dye molecules, fluorescent proteins, and inorganic nanoparticles) may be bound to biological targets with high specificity and through numerous coupling strategies, potentially providing a complete portrait of the observed sample. So-called multi-species (or multi-label) fluorescence imaging allows the detection of multiple targets, enabling the observation of interactions and relative spatial organization among different cellular structures with specific molecular contrast. In addition, the recent introduction of fast detector arrays (in the MHz range) has enabled a transparent and versatile implementation of image scanning microscopy (ISM), which has led CLSM to be counted among super-resolution techniques. In such an ISM implementation (described, for example, in WO 2019/145889 A1), a detector array-the projected size of which in the sample plane is 1-1.5 airy units (AU)-replaces the pinhole and single-element detector, typically used in CLSM, to provide an image of the fluorescent volume. This additional spatial information provided by the detector array may be used to reconstruct a super-resolved image with twice the resolution of conventional microscopy and a higher signal-to-noise ratio (SNR). Each element of the detector array acts as a single physical pinhole that produces a series of super-resolved but low SNR images. Since most of the fluorescence signal is acquired in parallel from the detector elements, a high SNR image may be obtained by combining all the images collected by pixel reassignment or multi-image deconvolution.

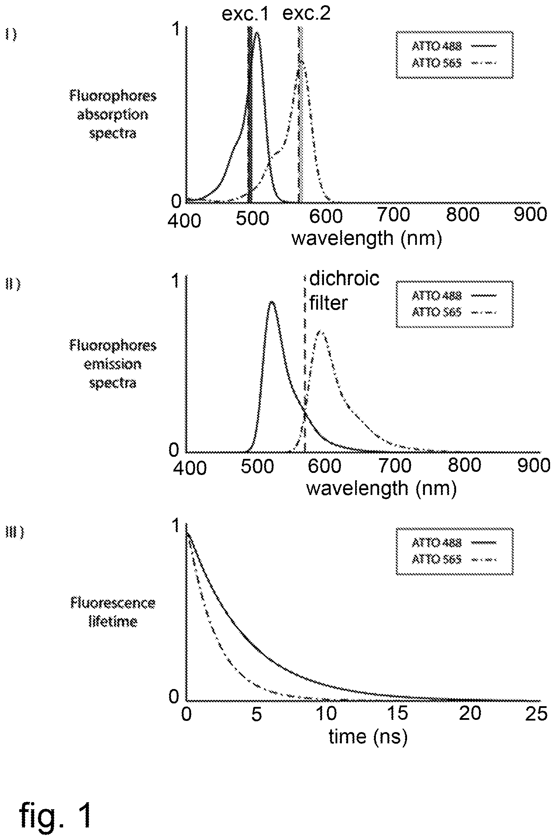

In conventional CLSM, simultaneous multi-species imaging is implemented by separating the different probes-or rather, the different fluorescent signals-on the basis of the photophysical properties of each probe. In particular, three different properties are typically used: the excitation spectrum, the emission spectrum, and the mean fluorescence lifetime (Fig. 1). Any strategy that relies on only one of these properties has strengths and limitations. For this reason, combined approaches are preferred. However, the resulting implementations are always a trade-off between system complexity, the number of separable species, the ability to perform simultaneous imaging, and cost. ISM implementations based on an array of detectors (hereinafter, simply ISM), the multi-species strategies demonstrated so far, explore only excitation and emission spectra, and consist of copies of the basic CLSM approaches. In effect, the implementation of the more sophisticated multi-species CLSM approaches requires expensive and poorly scalable architectures-in terms of the number of separable species-or may not even be implemented.

Multi-species CLSM

The most widely used method for simultaneous multi-species CLSM imaging separates the signals of different probes by exploring the signatures of their emission spectra. All probes are simultaneously excited with one or more monochromatic laser beams ($\lambda_{exc}$). The fluorescent signal is then isolated from the excitation light and divided into a series of spectral windows ($\lambda_{det}$, where $\lambda_{det}$ denotes the central value of the spectral band)-one for each probe-by a combination of filters, dichroic mirrors and/or adjustable acousto-optic filters. Finally, a detector for each spectral band, i.e., a probe, records the fluorescence signal. Said multi-detector spectral implementation has two major limitations: the number of detectors required increases with the number of probes, and the cross-talk between the emission spectra of different probes degrades the image.

The second problem may be partially solved by breaking the simultaneity of excitations to add information on the excitation spectra of the probes in the embodiment. In this case, the excitation laser beams are activated/modulated sequentially, and a series of images is recorded: one for each pair of values related to detector band and excitation beam wavelength ($\lambda_{exc}$, $\lambda_{det}$). The image formed by the best corresponding excitation and emission wavelengths is selected for each probe. Then, the remaining cross-talk may be eliminated using linear unmixing algorithms. Because of the sequential activation of laser excitation beams, it is crucial to adopt fast modulation to effectively obtain simultaneous imaging. For example, a frame-by-frame or line-by-line modulation may be too slow to perform imaging of dynamic structures. Because fast biological processes occur with sub-millisecond time scales (changes in shapes of the proteins occur with much smaller scales, down to microseconds, but imaging is not an option for observing such processes in every case), and the typical dwell time of the pixel is in the range of tens of microseconds or less, the modulation of the laser beams on a pixel-by-pixel basis ensures simultaneous multi-species imaging.

Recently it has been proposed to modulate the excitation beams with a frequency greater than that given by the dwell time of the pixel (US 9231575 B2). Said multi-species CLSM implementation multiplexes the excitation beams in the frequency domain. Accordingly, demodulation is achieved by filtering in the frequency domain. Moreover, said implementation uses a single detector without regard to the number of probes to be separated, thus greatly reducing implementation costs. In contrast, the use of a single detector precludes exploration of the excitation and emission spectra of the probes.

A multi-species CLSM that uses a single detector but explores the emission spectrum may be implemented using a linear detector array (US 20190361213 A1). Here, the fluorescence signal-induced by one or more excitation beams-is spectrally decomposed in space using a prism (or grating), and each wavelength is mapped to a specific position/element of the linear detector. The three-dimensional (x, y, λ) image, the so-called emission spectral image, is processed by a (blind) spectral unmixing algorithm to form the final multi-species image potentially free of artifacts due to the cross-talk of the signals. In this class of CLSM implementations, typically called hyper-spectral implementations, it is also possible to explore excitation spectra by modulating the excitation beams as described above. Hyper-spectral CLSM implementations could also be achieved by sequentially recording emission spectra; i.e., the fluorescence signal is spectrally dispersed in space, an adjustable double slit selectively filters only part of the spectrum, and a single-element sensor records the selected signal. Nevertheless, sequential recording of spectra prevents (by definition) simultaneous multi-species imaging.

All multi-species CLSM implementations described above use the emission signature and/or excitation signature to separate different probes. Another probe signature to be explored is the mean fluorescence lifetime and, more generally, the time decay distribution. Similar to the excitation and emission spectra, a probe may be characterized by a time spectrum $f(t)$, which describes the probability that an excited molecule/probe will emit a spontaneous photon (fluorescent photon) at a given time $t$ after the excitation event. The mean time the molecule spends in the excited state is called the mean fluorescence lifetime $\tau$. In the case of a pure organic fluorophore, said distribution may be described by a single exponential $f_t \propto \exp(-t/\tau^{fl})$, but more convoluted models are needed in many practical cases. In CLSM, the mean lifetime decay distribution of a fluorescent probe is obtained by implementing a time-correlated single-photon count (TCSPC) experiment: a pulsed laser beam (typically with a pulse length of a few tens of picoseconds) excites the probe at a specific time ($t = 0$); a single-photon detector with a low timing jitter (from tens of picoseconds up to a few hundred picoseconds) records the fluorescent photons emitted by the probes; a time-to-digital converter (TDC) or a high-frequency digitizer measures the time difference between the excitation and recording events. The histogram of the arrival time of the photons is measured by repeating experiments (typically, the pulsed laser has a repetition rate on the order of tens of MHz). In a TCSPC-based CLSM, multi-species imaging may be implemented by recording the photon arrival histogram for each pixel and decomposing said histogram (according to the decay distribution of different probes) using different computation algorithms based on fitting, deconvolution, phasor decomposition, or linear unmixing. An interesting property of said implementation is the possibility of separating species with very similar excitation and emission spectra, thus using a single excitation beam and a single detection band, i.e., a single detector, which not only brings benefits in terms of complexity, but also allows imaging artifacts due to chromatic aberrations to be avoided. The same TCSPC-based CLSM system may be used to implement the above-described excitation laser modulation in a pulse-by-pulse mode, thus enabling exploration of the excitation spectral signature for multi-species imaging. The pulses from a series of monochromatic lasers are subjected to interleaving (with a delay longer than the mean fluorescence lifetime), and the histogram of the arrival time of the photons is used to implement time-gated detection and separate the signal associated with each probe. Said pulse interleaving approach may also be combined with emission spectral separation approaches to increase the number of probes to be separated, but more detectors are needed.

Multi-species ISM

One of the most notable advantages of ISM implementation based on a fast detector array is its compatibility with many labeling methods, techniques, and protocols implemented in fluorescence CLSM, including many of the multi-species imaging techniques described above.

ISM is fully compatible with the spectral multi-detector approach, the modulated multi-excitation approach, and combinations thereof. Consequently, a person skilled in the art may easily integrate such simultaneous multi-species approaches into ISM. However, to date only slow frame-by-frame modulated multi-excitation ISM implementations have been demonstrated. In this case, different excitation wavelengths and spectral windows are alternated through motorized filter lenses using a single detector array; however, true simultaneous imaging such as that demonstrated in CLSM is precluded.

Conversely, hyper-spectral methods are not fully compatible with ISM. The basic principle of hyper-spectral methods is to decode spectral information in space, i.e., to decompose emission spectra spatially. Such spatial decomposition interferes with ISM because in ISM the spatial information channels are already used to transfer the image of the detection volume. Because spatial and spectral information are fused in the same channel and scale, their decomposition is non-trivial. For completeness, a hyper-spectral ISM implementation has been proposed and used to reconstruct two-species ISM images. However, for the same reasons described above, this implementation is subject to major artifacts in both spatial resolution and species separation.

The recent introduction of single-photon detector arrays (such as the single-photon avalanche diode array detector (SPAD)) also enables the implementation of multi-species imaging methods based on the mean fluorescence lifetime signature. In effect, the ability of the SPAD array-based ISM to implement TCSPC measurements has been fully demonstrated. However, in this case, no demonstration of multi-species ISM based on mean fluorescence lifetime has been reported.

Due to the introduction of asynchronous SPAD array detectors, many of the simultaneous multi-species imaging methods demonstrated in CLSM may in principle be extended to ISM, with some substantial limitations regarding hyperspectral approaches. However, similar to CLSM, there is no single method able to explore, at the same time, the excitation spectrum, the emission spectrum, and the mean fluorescence lifetime signature. The constraints become even more important when only a single detector may be used in the implementation. One object of the invention is to propose a new architecture for multi-species ISM imaging that provides simultaneous imaging, high scalability in terms of number of species, and low cost. Another object of the invention is to propose a new architecture that also offers similar benefits for CLSM, and more generally, for any fluorescence technique based on laser scanning microscopy (LSM), e.g., stimulated emission depletion microscopy (STED), twophoton excitation microscopy (TPE), and fluorescence fluctuation spectroscopy (FFS).

In light of these objects, the subject of the invention is a laser scanning microscope as defined in claim 1. The laser scanning microscope is configured to illuminate a specimen with a plurality of pulsed excitation light beams comprising different spectral components, hereinafter excitation spectral components, said specimen containing a plurality of fluorescent species, wherein the microscope comprises:

   a single-photon detector array configured to detect a fluorescence signal emitted from the sample, said fluorescence signal comprising different spectral components, hereinafter emission spectral components,
   an excitation spectrum encoder configured to impose a respective time delay on each excitation spectral component, such that each excitation spectral component illuminates the sample at a different time relative to the other excitation spectral components,
   an emission spectrum encoder configured to impose a respective time delay on each emission spectral component, such that each emission spectral component reaches the single-photon detector array at a different time relative to the other emission spectral components,
   a data acquisition system configured to acquire a measurement signal provided by the single-photon detector array and to provide a time-resolved image of the sample, and
   a multi-species decoder configured to decode the excitation spectrum, the emission spectrum, and the fluorescence decay curve for each of said fluorescent species, based on said time-resolved image of the sample.

Another subject of the invention is a method of laser scanning microscopy as defined in claim 7. The method comprises:

   illuminating a sample with a plurality of pulsed excitation light beams comprising different spectral components, hereinafter excitation spectral components, said sample containing a plurality of fluorescent species, wherein illuminating the sample comprises:

   - imposing a respective time delay on each excitation spectral component, such that each excitation spectral component illuminates the sample at a different time relative to the other excitation spectral components,

   detecting a fluorescence signal emitted by the fluorescent species in the sample with the single-photon detector array, said fluorescence signal comprising different spectral components, hereinafter emission spectral components, wherein detecting the fluorescence signal comprises:

   - imposing a respective time delay on each emission spectral component, such that each emission spectral component reaches the single-photon detector array at a different time relative to the other emission spectral components,

   acquiring a measurement signal provided by the single-photon detector array and providing a time-resolved image of the sample, and
   decoding the excitation spectrum, the emission spectrum, and the fluorescence decay curve for each of said fluorescent species, based on said time-resolved image of the sample. Single-photon detectors allow access to a wide range of time scales (with the only lower limit being the sub-nanosecond scale) due to their low photon timing jitter (when an element in the detector array receives a photon, it activates a signal with an accuracy of up to 200 ps), the reduced waiting time (up to 50 MHz, i.e., after a photon has been collected, the element remains blind for 20 ns), and the asynchronous readout (i.e., each detector array element is fully independent of the others).

While the mean fluorescence lifetime information is in the sub-nanosecond/nanosecond time scale, the fastest biological processes and the laser scanning process occur in the microsecond range. Thus, a simultaneous multi-species LSM would be feasible even with detectors covering only a time scale down to the microsecond, but the implementation of multi-species ISM based on the mean fluorescence lifetime of the probe would require access to the nanosecond time scale. In short, the time scale from tens of nanoseconds to microsecond is little used and may be adopted to transfer additional information (in practice, in LSM and used to improve the SNR).

Therefore, the idea behind the invention is to use this available band to transfer useful information to separate probes in the simultaneous multi-species ISM. Here, in particular, said available band is used to encode the excitation and emission spectral signatures of the probes. This idea translates into a TCSPC-based ISM measurement, where the photon arrival time histogram is used to encode: (i) the mean fluorescence lifetime signature of the probes, as in typical TCSPC experiments; (ii) the excitation spectral signature of the probes, by phase-multiplexing different excitation beams; and (iii) the emission spectral signature of the probes, by temporally separating the different spectral components of the fluorescent signal.

Note that hyper-spectral methods separate the spectral component of the fluorescent signal in space rather than time. Once the photon arrival time histogram has been recorded, wellestablished computational methods such as (blind) linear unmixing, phasor-based unmixing, fitting, deconvolution, or machine learning may be used to decode the probe signatures to obtain a multi-species ISM image. Since all encoding operations are performed using the time channel, the proposed approach may use a single detector. Moreover, because the encoding uses the sub-microsecond time scale, the simultaneous multi-species approach is ensured. Note that the same strategy may be applied for CLSM with a typical single-element, single-photon detector, but super-resolved images in this case are not obtainable.

The main advantages offered by the proposed solution over existing multi-species imaging approaches are:

- compatibility with standard CLSM without the need for heavy setup changes. The single-photon detector array and data acquisition system are the only changes or upgrades needed relative to the standard CLSM architecture;
- compatibility with ISM approaches. The solution enables multi-species imaging while maintaining the improved spatial resolution offered by ISM;
- the solution allows full exploration of the three main probe signatures (excitation spectrum, emission spectrum, fluorescence lifetime) alone and in combination (color-time signature) in order to achieve multi-species imaging in a scalable and simple manner;
- compatibility with known spectral unmixing, deconvolution, phasor, fitting, and machine learning algorithms.

Further features and advantages of the invention will be presented in the following detailed description, which refers to the attached drawings, provided only by way of non-limiting example, wherein:

- Fig. 1 plots absorption spectrum (I), emission spectrum (II) and fluorescence lifetime decay for ATTO 488 and ATTO 565 fluorescent probes produced by Merck KGaA;
- Fig. 2 is a functional graphical representation of an apparatus according to the invention;
- Fig. 3 shows: (I) a pulse interleaving excitation pattern, (II-III) color-time signatures of the ATTO 488 and ATTO 565 probes, (IV) a color-time signature given by the combination of the signatures of boxes II and III; and
- Fig. 4 shows an experimental prototype of a microscope according to the invention.

Methods according to the invention may be implemented using, as the starting microscope architecture, a TCSPC-based ISM configuration (as described in M. Castello et al., "A robust and versatile platform for image scanning microscopy enabling super-resolution FLIM" [1]) or based on digital heterodyne.

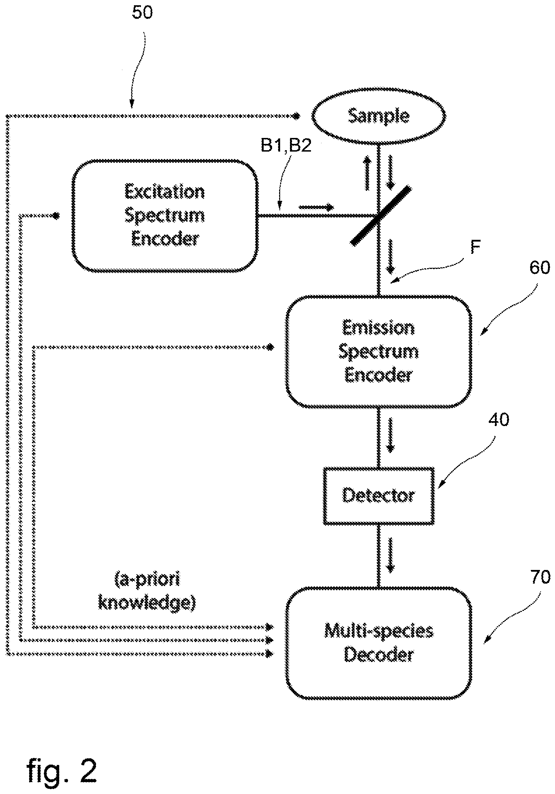

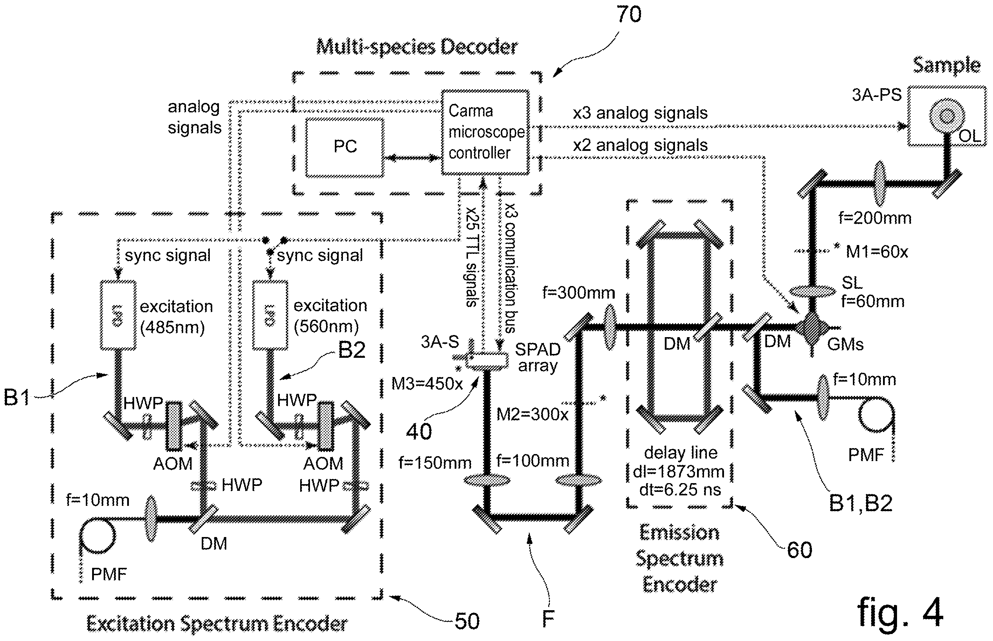

In short, the starting microscope is a multi-beam pulsed laser fluorescence confocal microscope where the pinhole is fully open, and the conventional single-element detector typically used in CLSM is replaced with a single-photon detector array (e.g., a SPAD array detector), denoted as 40 in the figures. The different spectral components defined by the excitation beams are denoted as B1 and B2 in Figs. 2 and 4, while the fluorescence signal is denoted as F. To preserve the optical sectioning capability of the system, a telescope (or magnifying lens) ensures a projected detector array size between 1 and 1.5 AU. To implement time-resolved measurements, each element of the detector array is connected to a multichannel time-labeling DAQ card (or a mean fluorescence lifetime digital system in the multi-channel frequency domain or a multi-channel fast digitizer), synchronized with the laser beam pulses. Three main updates need to be introduced in the architecture described above to implement the methods according to the invention (see Figs. 2 and 4):

- an excitation spectrum encoder, denoted as 50 in the figures. This is a system that encodes the excitation spectral signature of fluorescent probes/species into the time channel of the microscope system. Said system acts on the time distribution of the different pulses of the laser excitation beams. A technical embodiment of the excitation spectrum encoder, based on pulse interleaving, will be described hereinafter;
- an emission spectrum encoder, denoted as 60 in the figures. This is a system that encodes the emission spectral signature of fluorescent probes/species in the time channel of the microscope. Said system breaks down the fluorescent signal into its spectral components, similar to a spectrometer. However, instead of separating them spatially (i.e., each component is projected onto a different position of a linear array of detectors), it is able to break them down temporally (i.e., each component is delayed differently before reaching the detector array). A technical embodiment based on optical delay lines will be described hereinafter;

- a multi-species decoder, denoted as 70 in the figures. This is a system that decodes the excitation spectrum, the emission spectrum, and the mean fluorescence lifetime decay for each fluorescent probe/species, along with the concentrations of the probes in the sample (or rather at each sample location, as the entire pipeline is implemented pixel-by-pixel/location-by-location by scanning the sample using laser beams).

Due to the two encoders and the pulse excitation scheme, each probe is characterized by a specific time signature, which will be called a color-time signature hereinafter. The single-photon detector array 40 records a linear combination of said signatures, the coefficients of which are proportional to probe concentrations. Therefore, the primary task of the decoder 70 is to computationally retrieve the coefficients of said linear combination (and possibly also the color-time signatures). In practice, the decoder 70 is implemented using spectral (blind) unmixing, (blind) deconvolution, phasor decomposition, fitting (if a signature model is provided), or machine learning algorithms. The (blind) spectral unmixing approach will be described in more detail hereinafter.

General theory

The most important property and condition to be fulfilled in practical embodiments of the proposed method is that the fluorescence signal generated by the time-resolved measurement $f_x(t)$ (i.e., the histogram of the photon arrival time) in the position $x$ of the sample (i.e., the image pixel) and at the time $t$, is a linear composition of the color-time signatures $s_l(t)$ and the relative contributions/concentrations $c_{l,x}$ of the different probes:

$$f_x(t) = \sum_{l=1}^{L} s_l(t) \times c_{l,x} \forall x = 1, \dots, X \qquad (1)$$

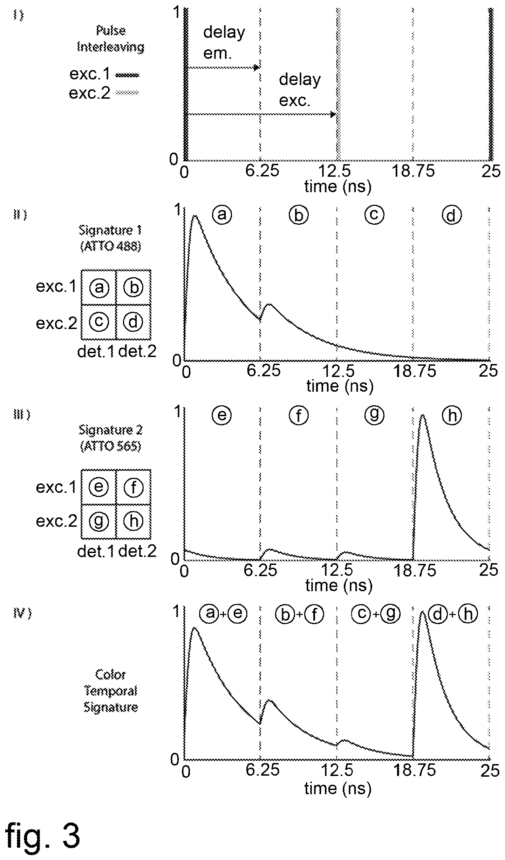

where $X$ is the number of spatial positions in the sample (image pixels), and $L$ is the number of probes to be separated. The number of probes is typically known in any multi-species fluorescence imaging experiment. As indicated above, the color-time signature $s_l(t)$ is a function of the signature of the mean fluorescence lifetime $\tau_l(t)$, the excitation spectral signature $e_l(\lambda)$, and the emission spectral signature $m_l(\lambda)$ of the probe. Two examples of a color-time signature $s_l(t)$ as a function of $\tau_l(t)$, $e_l(\lambda)$ and $m_l(\lambda)$ are shown in Fig. 3, boxes II and III, referring to the fluorescent dyes ATTO 488 and ATTO 565, respectively. Fig. 3 refers to an example where the excitation beams comprise two excitation spectral components, denoted as exc. 1 and exc. 2, the pulses of which alternately illuminate the sample at intervals of 12.5 ns (exc. delay). The signal emitted by each of the fluorescent probes ATTO 488 and ATTO 565 is broken down into two emission spectral components, specifically, a first spectral component (det. 1), the wavelengths of which are shorter than a discriminating wavelength determined by a dichroic filter, and a second spectral component (det. 2), the wavelengths of which are longer than the aforesaid discriminating wavelength and which is delayed relative to the first emission spectral component (em. delay) by 6.25 ns. Thus, four windows a, b, c, d, and e, f, g, h, respectively, determined by the excitation pulses and emission delays, for the ATTO 488 probe and the ATTO 565 probe, respectively, are identifiable in each of the time graphs in boxes II and III. For example, the window a of the signature 1 is related to the first emission spectral component of ATTO 488 excited by exc. 1, while in the window b said component is added to the second emission spectral component of ATTO 488 excited by exc. 1. In the windows c and d (following the illumination of the sample by the excitation component exc. 2), these components decay without being excited by exc. 2. Similarly, the window e of the signature 2 is related to the first emission spectral component of ATTO 565 excited by exc. 1, while in the window f said component is added to the second emission spectral component of ATTO 565 excited by exc. 1. Said components are small but not zero since the wavelength of exc. 1 falls marginally in the absorption spectrum of ATTO 565. The contributions of the first spectral component and the second spectral component excited by exc. 2 are added in the windows g and h (following the illumination of the sample by the excitation component exc. 2).

In order to implement multi-species blind imaging, the object of the decoder 70 is to estimate, for each position $x$ of the sample, the concentrations $c_{l,x}$ and color-time signatures $s_l(t)$, starting from their "mixture" $f_x(t)$ (see Fig. 3, box IV, where in the four time windows of the example described above, there is the sum of the contributions of ATTO 488 and ATTO 565: a+b, b+f, c+g, d+h).

Considering the time-resolved measurement after the time discretization and the time sampling window $t = t_1, \dots, t_T$ of the photon arrival time, Equation 1 may be written in vector notation as:

$$f_x = \sum_{l=1}^{L} s_l c_{l,x} \qquad (2)$$

where $f_x = [f_x(t_1), \dots, f_x(t_T)]^T$ is the histogram of photon arrival time measured in the $x$-th pixel and $s_l = [s_l(t_1), \dots, s_l(t_T)]^T$ is the color-time signature for the $l$-th species. Thus, switching to vector notation:

$$f_x = S c_x \qquad (3)$$

where $S = [s_1, \dots, s_L]$ with $S \in R^{T \times L}$ and $c_x = [c_{1,x}, \dots, c_{L,x}]$. Finally, by incorporating all spatial samples (i.e., all pixels), the model of the mixture (equation 1) may be described by three matrices:

$$F = SC \qquad (4)$$

where $F = [f_1, \dots, f_X]$ is the overall time-resolved measurement matrix, with $F \in R^{T \times X}$, and $C = [c_1, \dots, c_X]$ is the concentration of each species at each available location in the sample, with $C \in R^{L \times X}$.

Given that in fluorescence microscopy the sample is typically artificially labeled, not only the number of species $L$ is known, but also the color-time signatures $s_l(t)$ may be individually calibrated and estimated a priori. However, it should be kept in mind that calibrated signatures may sometimes be highly dependent on imaging conditions and labeling protocol (thus they may change from sample to sample).

Therefore, both the most arduous situation, where the color-time signatures $s_l(t)$ are not known, and the simplest case, where the color-time signatures $s_l(t)$ are known, are considered. If the color-time spectra **S** are known, **C** may be calculated from **F** by linear unmixing, otherwise the problem becomes a linear blind unmixing problem.

An example of how to solve the blind problem is now described. The non-blind problem is clearly a simplification of that more general problem and is typically solved sequentially (pixel-by-pixel) using equation 3 instead of equation 4. With the matrix notation of equation 4, the decoding operation, i.e., the unmixing problem, may be written as a problem of minimizing the difference between the measured "mixture" **F** and the modeled/predicted "mixture" **SC**. A different formulation of said minimization problem may be obtained on the basis of alternative assumptions, such as the probability distribution of the noise contaminating the measurements (e.g., Gaussian or Poissonian noise), and on other assumptions about color-time signatures and concentration values, typically introduced through regularization terms in the minimization problem. A formulation is given here where the Frobenius norm is used [2]:

$$\min_{S,C} \|\boldsymbol{F} - \boldsymbol{SC}\|_F^2 \qquad (5)$$

Typical constraints to be introduced in the minimization problem are normalization and non-negativity of color-time signatures:

$$s_l^T \mathbf{1}_T = \sum_{i=1}^{T} s_l(t_i) = 1 \ \forall l \qquad (6)$$

$$s_l(t_i) \geq 0 \ \forall t_i \qquad (7)$$

and the non-negativity of the coefficients:

$$c_{l,x} \geq 0 \ \forall l, x \qquad (8)$$

Furthermore, since in the blind problem the minimization is achieved by considering all sample locations together, it is common practice to impose an intensity normalization on the data measured at each sample location (image pixel), i.e., $f_x^T \mathbf{1}_T = 1 \ \forall x$, which results in the following constraints on the coefficients:

$$c_x{}^\top \mathbf{1}_L = \sum_l^L c_{l,x} = 1 \; \forall x \qquad (9)$$

The absolute intensity of each species $l$ and each pixel $x$ is obtained by multiplying the corresponding coefficient $c_{l,x}$ obtained by the total measured non-normalized initial intensity

$$\sum_{i=1}^{T} f_x(t_i).$$

A typical solution to the linear blind unmixing problem is obtained by an inverse least squares procedure that minimizes the difference between the measured mixture and the modeled/predicted mixture [3]. Another example of how to transform the blind and non-blind unmixing problems by considering Poissonian noise in the measured mixture may be found in [4]. Note that the minimization approach described here is only one of several ways to transform the unmixing problem of equations 4 and 5. For example, the unmixing problem may be solved using other computational approaches such as phasor transformation, fitting, or machine learning. Note also that all of the above examples are used to solve the unmixing problem in the context of CLSM and only where typical hyper-spectral measurements or mean fluorescence lifetime histogram measurements are used.

The approach according to the invention measures a specially defined signature: the color-time signature, which encodes all the photophysical features of the fluorescent probes in the time-resolved measurement. Thus, conventional unmixing algorithms are used to calculate the probe coefficients/concentrations from the measured color-time signature.

Embodiment with a discrete emission spectrum encoder

As mentioned above, a first practical embodiment to effectively encode the excitation and emission spectra of the probes into the photon arrival time histogram will now be described. For the excitation spectrum encoder 50, a pulse interleaving is used to encode excitation spectra, i.e., a sequence of J excitation pulses at different wavelengths is implemented ( $\lambda_j^{exc}$ with $j = 1, ..., J$), which is repeated periodically with a predetermined frequency (see Fig. 3-I). Thus, the different species/probes in the sample are excited with a different probability, which depends on their excitation spectra ($e_l(\lambda)$ with $l = 1, ... , L$).

An effective implementation of pulse interleaving, which relies only on electronic components, may be achieved by using a set of triggerable pulsed diodes, the pulses of which may be electronically synchronized with each other with specific delays. The excitation beams are then focused on the sample, and the fluorescence signal is collected by an objective lens and supplied to the emission spectrum encoder 60. There, the fluorescence signal is split by a series of dichroic mirrors into spectral windows $K$ ( $[\lambda_j^{em}, \lambda_{j+1}^{em}]$ with $j = 1, ..., K + 1$). Each window is capable of containing different portions of the probes' fluorescence according to their emission spectra ($m_l(\lambda)$ with $l = 1, ..., L$). Subsequently, the different components are guided through optical paths with different lengths (for example, an optical delay line) to introduce specific time delays. Finally, all components are recombined by a second set of dichroic mirrors and sent back onto the single-photon detector array 40 (a simplified example of that which is achieved by this process is shown in Fig. 3, boxes II-IV). Due to that specific encoder, the color-time signature of the $l$-th probe is given by:

$$s_l(t) = \tau_l(t) * \left( \sum_{i=1}^{J} \alpha_{l,j}\delta\left(t - t_j^{exc}\right) \right) * \left( \sum_{j=1}^{K} \beta_{l,k}\delta\left(t - t_k^{em}\right) \right) \qquad (10)$$

with

$$\alpha_{l,j} = e_l\left(\lambda_j^{exc}\right) ( \qquad 11)$$

$$\beta_{l,k} = \int_{\lambda_k^{em}}^{\lambda_{k+1}^{em}} m_l(\lambda)d\lambda \qquad (12)$$

where * denotes the convolution operator; $\tau_l(t)$ is the mean fluorescence lifetime signature for the $l$-th probe; $t_j^{exc}$ is the delay of the $i$-th laser excitation beam; $t_k^{em}$ is the delay of the $k$-th detection spectral window. In short, $\alpha_{l,j}$ is the probability of exciting the $l$-th probe with the $j$-th laser beam, and $\beta_{l,k}$ is the probability that the emission from the $l$-th probe falls in the $k$-th time window. With some simple calculations, the following equation for the color-time signature is obtained:

$$s_l(t) = \sum_{j,k}^{J,K} \alpha_{l,j}\beta_{l,k}\tau_l\left(t - t_j^{exc} - t_j^{em}\right) \quad (13)$$

In practice, the pulse sequence is repeated with a frequency $\frac{1}{T}$, so $T$ is the maximum value of the measured photon arrival time; $t_j^{exc} < T$, $\forall j$; $t_k^{em} < T$, $\forall j$. Moreover, to avoid overlapping signature copies of mean fluorescence lifetime, the excitation delay and emission delay should be separated by a time longer than the mean lifetime of all probes $\tau_l^{fl}$.

Note that the sequence of excitation pulses may be arranged to implement Hadamard coding to improve the SNR of the measurement, and here the delay $t_j^{exc}$ may also be equal.

Embodiment with a continuous emission spectrum encoder

In this alternative practical embodiment, the encoder of the emission spectrum 60 changes while the encoder of the excitation spectrum 50 remains unchanged. In said continuous encoder, the emission spectrum is not separated into discrete windows, but is spatially separated by a prism, grating, or other similar device. Each component of the emission spectrum (continuous) follows a different path (with linearly increasing length) so as to introduce a different delay as a function of wavelength. Subsequently, all components are spatially recombined and sent to the single-photon detector array 40.

In this case, defining the coordinate variation $m(t) = m(\lambda/a)$ that linearly delays the emission spectrum in time as a function of a time constant $a$, the color-time signature is given by:

$$s_l(t) = \tau_l(t) * \left(\sum_{i=1}^{N} \alpha_{l,j}\delta(t - t_i^{exc})\right) * m(t) \quad (14)$$

With some simple calculations the following is obtained:

$$s_l(t) = \sum_{j}\left(\alpha_{l,j}\tau_l(t - t_i^{exc}) * m(t)\right) \quad (15)$$

Step-by-step description

1. A set of multi-color pulsed beams (from an array of lasers or a supercontinuum source) enters the excitation spectrum encoder 50, which imposes a precise and well-known time delay on each spectral component of the excitation beam.
2. The multi-color excitation beam is focused by an objective lens on a specific sample location, which has been previously labeled with a series of different fluorescent probes to target precise substructures.
3. The fluorescence emitted from the sample is collected by the same objective, and the fluorescence beam is sent to the emission spectrum 60 of the encoder that imposes a specific time delay on each spectral component of the fluorescence beam.
4. The fluorescence signal is filtered by the excitation light and projected by a magnifying lens onto the single-photon detector array 40.

5. The output signal from the single-photon detector array 40 is acquired by a time-resolved acquisition system (such as a TCSPC card) that generates $P$ images, one for each element of the single-photon detector array 40. The images have a size of $T \times X$, where $X$ is the total number of spatial locations (i.e., pixels or voxels in the case of 3D imaging) and $T$ is the number of channels in the photon arrival time histogram.

6. The $P$ images are fused together by pixel reassignment (or other restoration algorithm) to produce the super-resolved ISM image $f_x$, time-resolved and with high SNR, of dimension $T \times X$.

7. The multi-species decoder 70 solves the linear unmixing problem by inverting sequentially (pixel-by-pixel) the linear system of the equation 3 or globally the linear system of the equation 4. Specifically, the different concentration coefficients $c_{l,x}$ are extracted from the time-resolved ISM image $f_x$ and used to construct the final multi-species super-resolved ISM image.

A prototype of the microscope (Fig. 4) was built by the inventors. Numerical values are shown in Fig. 4 by way of example, and are not intended to limit the invention.

The detection of a conventional confocal laser scanning microscope (CLSM) on an optical bench was modified. The traditional instrument is equipped with two excitation laser sources having respective wavelengths of 485 nm (LDH-P-C-485B, PicoQuant) and 560 nm (LDH-D-TA-560, PicoQuant).

A pulsed interleaving excitation scheme (excitation spectrum encoder 50) is implemented by commanding lasers with TTL signals from an FPGA control system (40 MHz repetition rate (laser period 25 ns), 12.5 ns delay between each pulse).

The sample is scanned by the laser beam through a pair of galvanometer mirrors (6215HM40B, CTI-Cambridge) and an objective lens (CFI Plan Apo VC60x oil, Nikon). Fluorescent photons are collected from the same objective lens, descanned and filtered by a multiband dichroic mirror (ZT-488-561-640-775, AHF Analysentechnik). The fluorescent signal is then sent to the emission spectrum encoder 60, which consists of a dichroic mirror (low-pass filter 575 nm, Edmund Optics) and four mirrors that define a delay line at 6.25 ns (corresponding to an optical path length of about 1.87 m) for fluorescence with wavelengths greater than 575 nm.

Finally, the beam is expanded and projected onto an array of SPAD detectors 40. The detector array has 25 elements arranged in a 5-by-5 array; it is mounted on a commercial stand with micrometer screws for fine alignment on three axes. The spatial and temporal performance of the detector array was evaluated, showing a temporal resolution of 200 ps and temporal jittering between 110 and 160 ps in the active area.

The detector array is controlled by a traditional dedicated operation board that provides power and performs electrical signal conditioning. The board provides 25 digital output channels (each related to the arrival of a photon on a specific element of the detector array), which are fed into a data acquisition system.

The data acquisition system was developed with a commercial FPGA development board (National Instruments USB-7856R), equipped with a Kintex7 FPGA processor and connected to a personal computer. The standard digital pixel/line/frame clock lines are used to synchronize the acquisition system with the microscope control system.

A digital heterodyne in the frequency domain is implemented in the FPGA control system to calculate the histogram of the photon arrival time.

Bibliographical references

[1] M. Castello et al. A robust and versatile platform for image scanning microscopy enabling super-resolution FLIM. Nat. Methods, 16 (2): 175-178, 2019.

[2] O. Gutierrez-Navarro et al. Blind end-member and abundance extraction for multispectral fluorescence lifetime imaging microscopy data. IEEE Journal of Biomedical and Health Informatics, 18 (2): 606-617, Mar 2014.

[3] M. Dickinson et al. Multispectral imaging and linear unmixing add a whole new dimension to laser scanning fluorescence microscopy. BioTechniques, 31 (6): 1272-1278, Dec 2001.

[4] R. A. Neher et al. Blind source separation techniques for the decomposition of multiply labeled fluorescence images. Biophysical Journal, 96 (9): 3791-3800, May 2009.

**Claims**

1. A laser scanning microscope configured to illuminate a sample with a plurality of pulsed excitation light beams comprising different spectral components (B1, B2), hereinafter excitation spectral components, said sample containing a plurality of fluorescent species, wherein the microscope comprises:

a single-photon detector array (40) configured to detect a fluorescence signal emitted by the sample, said fluorescence signal comprising different spectral components, hereinafter emission spectral components,

an excitation spectrum encoder (50) configured to impose a respective temporal delay to each excitation spectral component in such a way that each excitation spectral component illuminates the sample at a different time relative to the other excitation spectral components,

an emission spectrum encoder (60) configured to impose a respective temporal delay to each emission spectral component in such a way that each emission spectral component reaches the single-photon detector array (40) at a different time relative to the other emission spectral components,

a data acquisition system configured to acquire a measurement signal provided by the single-photon detector array (40) and provide a time-resolved image of the sample, said time-resolved image comprising, for each pixel or voxel in the image, a histogram of the photon arrival time of the emission spectral components to the single-photon detector array (40), and

a multi-species decoder (70) configured to decode the excitation spectrum, the emission spectrum, and the fluorescence decay curve for each of said fluorescent species, based on said time-resolved image of the sample.

2. The microscope of claim 1, wherein said single-photon detector array comprises an array of elements responsive to the fluorescence signal emitted by the sample, each of said responsive elements being capable of providing a respective time-resolved image of the sample, and wherein the data acquisition system is configured to fuse together the time-resolved images provided by the responsive elements, by means of a restoration algorithm, to produce a super-resolved image of the sample.

3. The microscope of claim 1 or 2, wherein the data acquisition system is synchronized with said pulsed excitation light beams.

4. The microscope of any of the preceding claims, wherein the excitation spectrum encoder (50) is configured to implement a sequence of excitation pulses periodically repeated with a pre-determined frequency, each of said excitation pulses corresponding to one of said excitation spectral components.

5. The microscope of claim 4, wherein the emission spectrum **encoder** (60) comprises:

   division means configured to divide said fluorescence signal into a plurality of spectral windows, each of said spectral windows containing one of said emission spectral components,
   delay means configured to impose a respective temporal delay to each of said emission spectral components, and
   recombination means configured to recombine said emission spectral components and resend them to the single-photon detector array (40).

6. The microscope of claim 4, wherein the emission spectrum **encoder** (60) comprises:

   division means configured to spatially separate the emission spectral components from the fluorescence signal and impose a respective temporal delay to each of said emission spectral components, and
   recombination means configured to recombine said emission spectral components and resend them to the single-photon detector array (40).

7. A method of laser scanning microscopy, comprising:

   illuminating a sample with a plurality of pulsed excitation light beams comprising different spectral components (B1, B2), hereinafter excitation spectral components, said sample containing a plurality of fluorescent species, wherein illuminating the sample comprises:

   - imposing a respective temporal delay to each excitation spectral component, in such a way that each excitation spectral component illuminates the sample at a different time relative to the other excitation spectral components,

   detecting a fluorescence signal emitted by the sample with a single-photon detector array (40), said fluorescence signal comprising different spectral components, hereinafter emission spectral components, wherein detecting the fluorescence signal comprises:

- imposing a respective temporal delay to each emission spectral component, in such a way that each emission spectral component reaches the single-photon detector array (40) at a different time relative to the other emission spectral components,

acquiring a measurement signal provided by the single-photon detector array (40) and providing a time-resolved image of the sample, said time-resolved image comprising, for each pixel or voxel in the image, a histogram of the photon arrival time of the emission spectral components to the single-photon detector array (40), and decoding the excitation spectrum, the emission spectrum, and the fluorescence decay curve for each of said fluorescent species, based on said time-resolved image of the sample.

## Patentansprüche

1. Laserabtastmikroskop, das konfiguriert ist, eine Probe mit einer Vielzahl von gepulsten Anregungslichtstrahlen zu beleuchten, die verschiedene spektrale Komponenten (B1, B2) umfassen, nachstehend als Anregungsspektralkomponenten genannt, wobei die Probe eine Vielzahl fluoreszierender Spezies enthält,

wobei das Mikroskop umfasst:

- eine Einzelphotonendetektoranordnung (40), die konfiguriert ist, ein von der Probe emittiertes Fluoreszenzsignal zu erkennen, wobei das Fluoreszenzsignal verschiedene spektrale Komponenten umfasst, nachstehend als Emissionsspektralkomponenten genannt,
- einen Anregungsspektrum-Codierer (50), der konfiguriert ist, auf jede Anregungsspektralkomponente eine entsprechende zeitliche Verzögerung anzuwenden, sodass jede Anregungsspektralkomponente die Probe zu einer anderen Zeit im Vergleich zu den anderen Anregungsspektralkomponenten beleuchtet,
- einen Emissionsspektrum-Codierer (60), der konfiguriert ist, auf jede Emissionsspektralkomponente eine entsprechende zeitliche Verzögerung anzuwenden, sodass jede Emissionsspektralkomponente die Einzelphotonendetektoranordnung (40) zu einer anderen Zeit im Vergleich zu den anderen Emissionsspektralkomponenten erreicht,
- ein Datenerfassungssystem, das konfiguriert ist, ein von der Einzelphotonendetektoranordnung (40) bereitgestelltes Messsignal zu erfassen und ein zeitaufgelöstes Bild der Probe bereitzustellen, wobei das zeitaufgelöste Bild, für jedes Pixel oder Voxel in dem Bild, ein Histogramm der Ankunftszeit der Photonen der Emissionsspektralkomponenten an der Einzelphotonendetektoranordnung (40) umfasst, und

einen Mehrspezies-Decodierer (70), der konfiguriert ist, das Anregungsspektrum, das Emissionsspektrum und die Fluoreszenz-Abklingkurve für jede der fluoreszierenden Spezies basierend auf dem zeitaufgelösten Bild der Probe zu decodieren.

2. Mikroskop nach Anspruch 1, wobei die Einzelphotonendetektoranordnung eine Anordnung von Elementen umfasst, die auf das von der Probe emittierte Fluoreszenzsignal reagieren, wobei jedes dieser reagierenden Elemente in der Lage ist, ein entsprechendes zeitaufgelöstes Bild der Probe bereitzustellen, und wobei das Datenerfassungssystem konfiguriert ist, die von den reagierenden Elementen bereitgestellten zeitaufgelösten Bilder mittels eines Wiederherstellungsalgorithmus zusammenzuführen, um ein hochaufgelöstes Bild der Probe zu erzeugen.

3. Mikroskop nach Anspruch 1 oder 2, wobei das Datenerfassungssystem mit den gepulsten Anregungslichtstrahlen synchronisiert ist.

4. Mikroskop nach einem der vorhergehenden Ansprüche, wobei der Anregungsspektrum-Codierer (50) konfiguriert ist, eine Sequenz von Anregungsimpulsen, die periodisch mit einer vorbestimmten Frequenz wiederholt werden, zu implementieren, wobei jeder der Anregungsimpulse einer der Anregungsspektralkomponenten entspricht.

5. Mikroskop nach Anspruch 4, wobei der Emissionsspektrum-Codierer (60) umfasst:

Teilungsmittel, die konfiguriert sind, das Fluoreszenzsignal in eine Vielzahl von Spektralfenstern zu teilen, wobei jedes der Spektralfenster eine der Emissionsspektralkomponenten enthält,
Verzögerungsmittel, die konfiguriert sind, auf jede Emissionsspektralkomponente eine entsprechende zeitliche Verzögerung anzuwenden, und
Rekombinationsmittel, die konfiguriert sind, die Emissionsspektralkomponenten neu zu kombinieren und an die Einzelphotonendetektoranordnung (40) zurückzusenden.

6. Mikroskop nach Anspruch 4, wobei der Emissionsspektrum-Codierer (60) umfasst:

Teilungsmittel, die konfiguriert sind, die Emissionsspektralkomponenten räumlich von dem Fluoreszenzsignal zu trennen und auf jede der Emissionsspektralkomponenten eine entsprechende zeitliche Verzögerung anzuwenden, und

Rekombinationsmittel, die konfiguriert sind, die Emissionsspektralkomponenten neu zu kombinieren und an die Einzelphotonendetektoranordnung (40) zurückzusenden.

7. Verfahren der Laserabtastmikroskopie, umfassend:

Beleuchten einer Probe mit einer Vielzahl von gepulsten Anregungslichtstrahlen, die verschiedene spektrale Komponenten (B1, B2) umfassen, nachstehend als Anregungsspektralkomponenten genannt, wobei die Probe eine Vielzahl fluoreszierender Spezies enthält, wobei das Beleuchten der Probe umfasst:

Anwenden einer entsprechenden zeitlichen Verzögerung auf jede Anregungsspektralkomponente, sodass jede Anregungsspektralkomponente die Probe zu einer anderen Zeit im Vergleich zu den anderen Anregungsspektralkomponenten beleuchtet,

Erkennen eines von der Probe emittierten Fluoreszenzsignals mit einer Einzelphotonendetektoranordnung (40), wobei das Fluoreszenzsignal verschiedene spektrale Komponenten umfasst, nachstehend als Emissionsspektralkomponenten genannt, wobei das Erkennen des Fluoreszenzsignals umfasst:

Anwenden einer entsprechenden zeitlichen Verzögerung auf jede Emissionsspektralkomponente, sodass jede Emissionsspektralkomponente die Einzelphotonendetektoranordnung (40) zu einer anderen Zeit im Vergleich zu den anderen Emissionsspektralkomponenten erreicht,

Erfassen eines von der Einzelphotonendetektoranordnung (40) bereitgestellten Messsignals und Bereitstellen eines zeitaufgelösten Bildes der Probe, wobei das zeitaufgelöste Bild, für jedes Pixel oder Voxel in dem Bild, ein Histogramm der Ankunftszeit der Photonen der Emissionsspektralkomponenten an der Einzelphotonendetektoranordnung (40) umfasst, und

Decodieren des Anregungsspektrums, des Emissionsspektrums und der Fluoreszenz-Abklingkurve für jede der fluoreszierenden Spezies basierend auf dem zeitaufgelösten Bild der Probe.

**Revendications**

1. Microscope à balayage laser conçu pour illuminer un échantillon avec une pluralité de faisceaux lumineux d'excitation pulsés comprenant différentes composantes spectrales (B1, B2), ci-après dénommées composantes spectrales d'excitation, ledit échantillon contenant une pluralité d'espèces fluorescentes,

le microscope comprenant:

un réseau de détecteurs à photon unique (40) conçu pour détecter un signal de fluorescence émis par l'échantillon, ledit signal de fluorescence comprenant différentes composantes spectrales, ci-après dénommées composantes spectrales d'émission,

un encodeur de spectre d'excitation (50) configuré pour imposer un retard temporel respectif à chaque composante spectrale d'excitation de manière à ce que chaque composante spectrale d'excitation éclaire l'échantillon à un moment différent par rapport aux autres composantes spectrales d'excitation

un encodeur de spectre d'émission (60) conçu pour imposer un retard temporel respectif à chaque composante spectrale d'émission de telle sorte que chaque composante spectrale d'émission atteigne le réseau de détecteurs à photon unique (40) à un moment différent par rapport aux autres composantes spectrales d'émission,

un système d'acquisition de données conçu pour acquérir un signal de mesure fourni par le réseau de détecteurs à photon unique (40) et fournir une image résolue en temps de l'échantillon, ladite image résolue en temps comprenant, pour chaque pixel ou voxel dans l'image, un histogramme du temps d'arrivée des photons des composantes spectrales d'émission au réseau de détecteurs à photon unique (40), et

un décodeur multi-espèces (70) conçu pour décoder le spectre d'excitation, le spectre d'émission et la courbe de décroissance de fluorescence pour chacune desdites espèces fluorescentes, sur la base de ladite image résolue en temps de l'échantillon.

**2.** Microscope selon la revendication 1, dans lequel ledit réseau de détecteurs à photon unique comprend un réseau d'éléments réactifs au signal de fluorescence émis par l'échantillon, chacun desdits éléments réactifs étant capable de fournir une image résolue en temps respective de l'échantillon, et dans lequel le système d'acquisition de données est conçu pour fusionner les images résolues en temps fournies par les éléments réactifs au moyen d'un algorithme de restauration, afin de produire une image à super-résolution de l'échantillon.

**3.** Microscope selon la revendication 1 ou 2, dans lequel le système d'acquisition de données est synchronisé avec lesdits faisceaux lumineux d'excitation pulsés.

**4.** Microscope selon l'une quelconque des revendications précédentes, dans lequel l'encodeur de spectre d'excitation (50) est conçu pour mettre en œuvre une séquence d'impulsions d'excitation périodiquement répétée avec une fréquence prédéterminée, chacune desdites impulsions d'excitation correspondant à l'une desdites composantes spectrales d'excitation.

**5.** Microscope selon la revendication 4, dans lequel l'encodeur de spectre d'émission (60) comprend:

des moyens de division conçus pour diviser ledit signal de fluorescence en une pluralité de fenêtres spectrales, chacune desdites fenêtres spectrales contenant l'une desdites composantes spectrales d'émission,
des moyens de retard conçus pour imposer un retard temporel respectif à chacune desdites composantes spectrales d'émission, et
des moyens de recombinaison conçus pour recombiner lesdites composantes spectrales d'émission et les renvoyer vers le réseau de détecteurs à photon unique (40).

**6.** Microscope selon la revendication 4, dans lequel l'encodeur de spectre d'émission (60) comprend:

des moyens de division conçus pour séparer spatialement les composantes spectrales d'émission du signal de fluorescence et imposer un retard temporel respectif à chacune desdites composantes spectrales d'émission, et
des moyens de recombinaison conçus pour recombiner lesdites composantes spectrales d'émission et les renvoyer vers le réseau de détecteurs à photon unique (40).

**7.** Procédé de microscopie à balayage laser, comprenant:
l'illumination d'un échantillon avec une pluralité de faisceaux lumineux d'excitation pulsés comprenant différentes composantes spectrales (B1, B2), ci-après dénommées composantes spectrales d'excitation, ledit échantillon contenant une pluralité d'espèces fluorescentes, ladite illumination de l'échantillon comprenant:

l'imposition d'un retard temporel respectif à chaque composante spectrale d'excitation, de telle sorte que chaque composante spectrale d'excitation illumine l'échantillon à un moment différent par rapport aux autres composantes spectrales d'excitation,
la détection d'un signal de fluorescence émis par l'échantillon à l'aide d'un réseau de détecteurs à photon unique (40), ledit signal de fluorescence comprenant différentes composantes spectrales, ci-après dénommées composantes spectrales d'émission, ladite détection du signal de fluorescence comprenant:

l'imposition d'un retard temporel respectif à chaque composante spectrale d'émission, de telle sorte que chaque composante spectrale d'émission atteigne le réseau de détecteurs à photon unique (40) à un moment différent par rapport aux autres composantes spectrales d'émission,
l'acquisition d'un signal de mesure fourni par le réseau de détecteurs à photon unique (40) et la fourniture d'une image résolue en temps de l'échantillon, ladite image résolue en temps comprenant, pour chaque pixel ou voxel de l'image, un histogramme du temps d'arrivée des photons des composantes spectrales d'émission au réseau de détecteurs à photon unique (40), et
le décodage du spectre d'excitation, du spectre d'émission et de la courbe de décroissance de fluorescence pour chacune desdites espèces fluorescentes, sur la base de ladite image résolue en temps de l'échantillon.

fig. 1

fig. 2

fig. 3

fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019145889 A1
- US 9231575 B2

- US 20190361213 A1

### Non-patent literature cited in the description

- **M. CASTELLO et al.** *A robust and versatile platform for image scanning microscopy enabling super-resolution FLIM*
- **M. CASTELLO et al.** A robust and versatile platform for image scanning microscopy enabling super-resolution FLIM. *Nat. Methods*, 2019, vol. 16 (2), 175-178
- **O. GUTIERREZ-NAVARRO et al.** Blind end-member and abundance extraction for multispectral fluorescence lifetime imaging microscopy data. *IEEE Journal of Biomedical and Health Informatics*, March 2014, vol. 18 (2), 606-617

- **M. DICKINSON et al.** Multispectral imaging and linear unmixing add a whole new dimension to laser scanning fluorescence microscopy. *BioTechniques*, December 2001, vol. 31 (6), 1272-1278
- **R. A. NEHER et al.** Blind source separation techniques for the decomposition of multiply labeled fluorescence images. *Biophysical Journal*, May 2009, vol. 96 (9), 3791-3800